Europäisches Patentamt

European Patent Office

Office européen des brevets

(11) Publication number: **0 028 926**
**B1**

(12) **EUROPEAN PATENT SPECIFICATION**

(45) Date of publication of patent specification: **08.05.85**

(21) Application number: **80303984.1**

(22) Date of filing: **07.11.80**

(51) Int. Cl.⁴: **B 23 H 1/02**

(54) **Method of wire-cut electric discharge machining.**

(30) Priority: **09.11.79 JP 145237/79**

(43) Date of publication of application:
**20.05.81 Bulletin 81/20**

(45) Publication of the grant of the patent:
**08.05.85 Bulletin 85/19**

(84) Designated Contracting States:
**DE FR GB**

(56) References cited:
**PATENTS ABSTRACTS OF JAPAN, vol. 3, no.
42, April 12, 1979, page 135 M 55**

(73) Proprietor: **FANUC LTD
3580, Shibokusa Aza-Komanba
Oshino-mura, Minamitsuru-gun Yamanashi
Prefecture (JP)**

(72) Inventor: **Obara, Haruki
844-7, Hashimoto, Sagamihara-shi
Kanagawa, 229 (JP)**

(74) Representative: **Bedggood, Guy Stuart et al
Haseltine Lake & Co. Hazlitt House
28 Southampton Buildings Chancery Lane
London WC2A 1AT (GB)**

Courier Press, Leamington Spa, England.

EP 0 028 926 B1

## Description

The present invention relates to a method of wire-cut electric discharge machining according to the precharacterising part of the claim, which is known per se.

A wire-cut electric discharge machine has various advantages — for example it does not require the special operator skills involved in cutting a metal mold or the like of a complicated shape with a high accuracy, and since an electrode used for electric discharge cutting is a wire there is no need to manufacture a working electrode of a required configuration as is needed in ordinary discharge machines. On account of such advantages wire-cut discharge machines are of a very wide application. However, a drawback of such machines is that cutting speed is low. In order to increase cutting speed, various improvements have been proposed. In general, for raising cutting speed, consideration has been given to increasing discharge frequency per unit time or the efficiency of one discharge, but prior art machines employ high-current, short-pulse discharges in many cases. Accordingly, it is unavoidable that the smoothness of a machined surface is degraded.

To improve surface roughness (i.e. to provide increased smoothness) resulting from main cutting using high-current, short-pulse discharge it has been proposed to follow main cutting by second cutting for cutting again the machined surface by low-current, pulse discharge at high speed. By this means, it is possible to obtain excellent surface roughness (better smoothness) as compared with a case in which low-speed cutting using low-current pulse discharges is employed from the beginning. Previously, however, the second cutting has taken place independently of the main cutting and, for example, in the case of die cutting, it is necessary to remove a scrap slug after the main cutting and re-set the cutting conditions for the second cutting, and in the case of punch cutting, it is necessary to perform the main cutting, leaving two or three portions of the machined area uncut, and carry out the second cutting after the main cutting. Accordingly, operations for the main and the second cutting must be effected separately; this introduces complexity in operation and makes it exceedingly difficult if not impossible to utilize the merits offered by automation of a wire-cut electric discharge machine.

Patent Abstracts of Japan, vol. 3, no. 42, April 12, 1979, page 135 M 55, Kokai No. 53-20496 discloses electrospark machining for wire cutting using first and second processings to provide high accuracy contour processing when a wire electrode and a workpiece are relatively moved and the workpiece is cut off into two parts. In the disclosed machining the relative motion between the wire electrode and the workpiece is prescribed by a program. Rounding of a rectangular edge by a first processing is corrected by a second processing.

One problem arising with the prior art method of a single continuous main cut over a continuous cutting path followed by a single second cut is that warping of the workpiece can arise with the main cut which warping may distort or prevent cutting on the second cut. For example, depending on the shape of the cutting path the cut formed by the main cut can be markedly narrowed by the warping, making the second cut impossible.

Another problem relates to the need for an operator to attend a cutting machine to carry out essential operations. The operator has to be in attendance for a relatively long time, i.e. from immediately after completion of the main cut. This can reduce the number of machines which can be attended by one operator, with adverse effects on production costs.

Further, without removal or even with removal of waste material after the main cut, cutting conditions may be varied on the second cut.

The achievement of good surface smoothness after cutting with a sufficiently high cutting speed still remains a problem which must be dealt with by any method which overcomes the other problems.

These problems are all overcome by the method of the claim.

According to the present invention there is provided a method of wire-cut electric discharge machining, for cutting a workpiece by producing discharges between a wire and the workpiece, in which main cutting by means of a high-current, short pulse discharge is effected over a cutting path, and second cutting by means of a low-current, pulse discharge is effected over said cutting path wherein, main cutting and second cutting are executed under numerical control, characterised in that

the main cutting is effected over separate sections of the cutting path at spaced time intervals,

that the second cutting is effected over these separate sections at spaced time intervals such that the second cutting of a path section is effected prior to the first cutting of the following path section,

and that for second cutting of one path section, the wire is moved back along the path of the main cutting for that one path section to a position a little short of a previous second cutting stop position (a position at which section cutting is stopped in relation to a previous path section) and then the wire is moved relative to the workpiece along a second cutting path for the said one path section.

An embodiment of the present invention can provide a wire-cut electric discharge machining method which permits the reduction of the overall cutting time.

An embodiment of the present invention can provide a wire-cut electric discharge machining method which is designed so that main cutting by high-current, short-pulse discharge and second cutting by low-current, pulse discharge are performed in parallel by one operation. In a wire-cut electric discharge machining method embodying this invention main cutting by a high-current, short-pulse discharge is combined with second cutting by a low-current, pulse discharge.

In a method embodying the present invention the relative feed rate of the wire and the workpiece in the second cutting may be from several times to several tens of times that in main cutting and, in addition, main and second cutting can be performed by one operation; accordingly, the overall cutting time is reduced as compared with that required in previous proposals.

Reference is made, by way of example, to the accompanying drawings, in which:—

Fig. 1 is a schematic block and circuit diagram illustrating principal parts of a wire-cut electric discharge machine for carrying out a method embodying the present invention; and

Fig. 2 is a schematic diagram illustrating an example of a cutting path, for explanation of operations of the machine of Fig. 1.

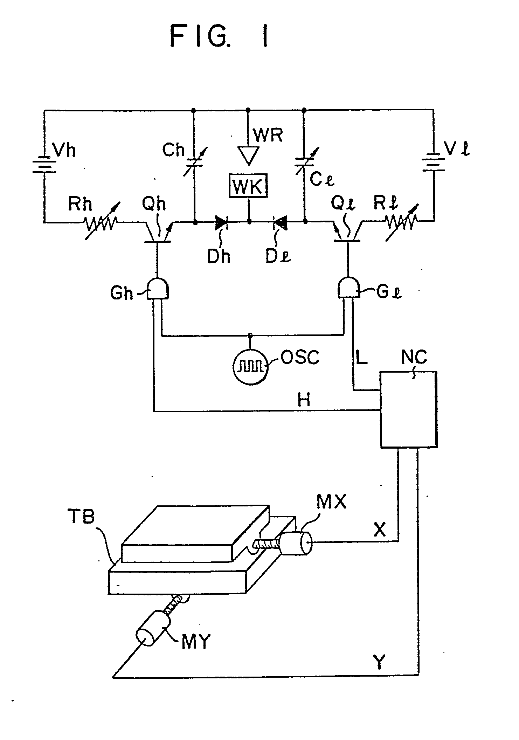

In Fig. 1, reference characters $V_h$ and $V_l$ indicate power sources; $R_h$ and $R_l$ designate resistors; $Q_h$ and $Q_l$ identify switching elements such as transistors or the like; $C_h$ and $C_l$ denote capacitors; $D_h$ and $D_l$ represent diodes; WR shows a wire; WK refers to a workpiece; $G_h$ and $G_l$ indicate AND circuits; OSC designates an oscillator; NC identifies a numerical control unit; TB denotes a table for supporting the workpiece WK; and MX and MY represent X-axis and Y-axis motors.

The power source $V_h$, the resistor $R_h$, the capacitor $C_h$, the diode $D_h$ and the switching element $Q_h$ constitute a high-current, short-pulse discharge circuit for main cutting. The power source $V_l$, the resistor $R_l$, the capacitor $C_l$, the diode $D_l$ and the switching element $Q_l$ make up a low-current, pulse discharge circuit for second cutting. Both discharge circuits are to supply discharge energy between the wire WR and the workpiece WK. In the illustrated embodiment, both discharge circuits employ transistor-capacitor charge and discharge circuits, which may, however, be replaced by some other discharge circuits capable of changing the discharge energy. The two discharge circuits respectively operate on the basis of drive pulses which are applied from the oscillator OSC to the gates of the switching elements $Q_h$ to $Q_l$, and these discharge circuits are selectively activated by opening or closing the AND circuits $G_h$ and $G_l$ by means of select signals H and L derived from the numerical control unit NC.

Further, the numerical control unit NC provides pulses X and Y to the X-axis and Y-axis motors MX and MY to control the feed of the table TB, moving the wire WR and the workpiece WK relative to each other. The illustrated example employs two-axis control, but in the case of tappering, use is made of three-axis (X, Y, Z) or four-axis (X, Y, U, V) control.

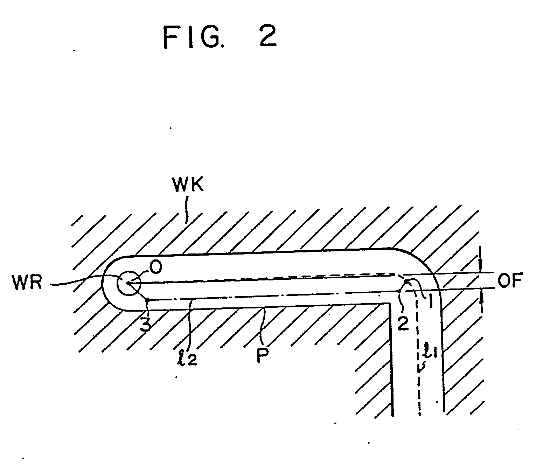

Fig. 2 shows an example of a cutting path, explanatory of operations of the discharge machine depicted in Fig. 1. In Fig. 2, reference character WR is a wire; WK is a workpiece; P identifies a required wall surface; $l_1$ denotes a main cutting path; $l_2$ represents a second cutting path; 0 to 3 indicate respective positions; and OF refers to an offset. Next, a description will be given, with reference to Fig. 2, of operations of the discharge machine illustrated in Fig. 1.

At first, the numerical control unit NC applies the select signal H to the AND circuit $G_h$ to open that circuit, through which an output pulse from the oscillator OSC is provided to the switching element $Q_h$ to activate the high-current, short-pulse discharge circuit. At the same time, the numerical control unit NC provides the pulses X and Y to the X-axis and Y-axis motors MX and MY to feed the wire WR and the workpiece WK relative to each other, performing discharge machining of the workpiece while moving the wire WR along the main cutting path $l_1$, as shown in Fig. 2. When main cutting reaches the predetermined position 0, the numerical control unit NC stops the feed of the wire WR to discontinue the main cutting and moves the wire WR back along the path $l_1$ to the position 1 at a high speed which is several times to several tens of times the speed in the case of the main cutting.

Next, the numerical control unit NC moves the wire WR along a path $1 \rightarrow 2$ until a commanded offset OF is reached and when the wire WR reaches the position 2, the numerical control unit NC applies the select signal L to the AND circuit $G_l$ to open that gate to operate the low-current pulse discharge circuit. At the same time, the cutting path is changed over to the second cutting path, along which the wire WR is moved to cut the required wall surface P of the workpiece. When the wire WR reaches the position 3, the cutting path is switched from the position 3 to 0 and the high-current, short-pulse discharge circuit is activated again to return the wire WR to the position 0 where the main cutting was discontinued previously, and then a next cutting is started. The feed rate of the wire WR in the path $1 \rightarrow 2 \rightarrow 3 \rightarrow 0$ is also several times to several tens of times the feed rate in the main cutting.

By repeating the above operations main cutting and second cuttings are performed in parallel to cut the workpiece WK. In this case, switching from main cutting to the second cutting is effected for each block of cutting, but in a case in which a block is long, the switching is also effected for each constant distance.

It is preferred that the position 1 in Fig. 2 for second cutting of one block or distance be set up a little short of a previous second cutting stopping point (corresponding to position 3 of the second cutting of a previous block or distance).

In Fig. 2, the wire WR is brought back along the main cutting path $l_1$ from the main cutting stopping position 0 to the position 1 and then the wire WR is shifted corresponding to the offset to reach the point 2, but it is alternatively possible to move the wire WR linearly from the position 0 to 2, changing the offset as the wire moves. In this case, the high-current, short-pulse discharge circuit and the low-current, pulse discharge circuit are changed over at a desired value of offset.

Above, second cutting has been described as being carried out once but it may also be repeated a required number of times.

As has been described in the foregoing, according to an embodiment of the present invention, main cutting and second cutting are alternately repeated by switching between a high-current, short-pulse discharge circuit and a low-current, pulse discharge circuit during cutting. Accordingly, there is no need to effect second cutting after completion of main cutting as has been required previously; main cutting and second cutting can be performed by one setting operation. Since the cutting speed of second cutting is several times to several tens of times that of the main cutting, an increase in the overall cutting time is only 2 to 20% of the time for main cutting.

The present invention provides a wire-cut electric discharge machining method for cutting a workpiece by producing a discharge between a wire and the workpiece designed to reduce overall cutting time and facilitate operations. The wire-cut electric discharge machining method can employ a high-current, short-pulse discharge circuit for producing a high-current, short-pulse discharge between the wire and the workpiece, a low-current, pulse discharge circuit for producing a low-current, pulse discharge between the wire and the workpiece, and control means for switching between the two discharge circuits and for controlling the relative feed of the wire and the workpiece. Main cutting by the high-current, short-pulse discharge circuit and at least one second cutting by the low-current, pulse discharge circuit are repeated for each predetermined section, thereby performing electric discharge machining of the workpiece.

The present invention provides a wire-cut electric discharge machining method for cutting a workpiece by producing a discharge between a wire and the workpiece, in which electric discharge machining of the workpiece is effected by repeating, for each predetermined section, a step of performing main cutting of the workpiece by producing a high-current, short-pulse discharge between the wire and the workpiece by a high-current, short-pulse discharge circuit and at least one second cutting of the workpiece by producing a low-current, pulse discharge between the wire and the workpiece by a low-current, pulse discharge circuit.

## Claim

A method of wire-cut electric discharge machining, for cutting a workpiece (WK) by producing discharges between a wire (WR) and the workpiece (WK), in which main cutting by means of a high-current, short-pulse discharge is effected over a cutting path, and second cutting by means of a low-current, pulse discharge is effected, over said cutting path, wherein main cutting and second cutting are executed under numerical control, characterised in that

the main cutting is effected over separate sections of the cutting path at spaced time intervals, that

the second cutting is effected over these separate sections at spaced time intervals such that the second cutting of a path section is effected prior to the first cutting of the following path section, and that

for second cutting of one path section $(1 \rightarrow 0)$, the wire (WR) is moved back along the path of the main cutting $(l_1$ for that one path section $(1 \rightarrow 0)$ to a position a little short of a previous second cutting stop position (a position at which second cutting is stopped in relation to a previous path section) and then the wire (WK) is moved relative to the workpiece along a second cutting path $(l_2)$ for the said one path section $(1 \rightarrow 0)$.

## Patentanspruch

Verfahren zur Bearbeitung durch elektrische Entladung mittels eines Schneidedrahts zum Schneiden eines Werkstücks (WK) durch Erzeugen von Entladungsvorgängen zwischen einem Draht (WR) und dem Werkstück (WK), bei dem ein Hauptschneidevorgang mittels eines Hochstrom-Kurzimpulsentladungsvorgangs über einen Schneideweg hinweg bewirkt wird und ein zweiter Schneidevorgang mittels eines Niedrigstrom-Entladungsvorgangs über den Schneideweg hinweg bewirkt wird, wobei der Hauptschneidevorgang und der zweite Schneidevorgang unter einer numerischen Steuerung ausgeführt werden, dadurch gekennzeichnet,

daß der Hauptschneidevorgang über separate Abschnitte des Schneideweges hinweg in einen Abstand voneinander aufweisenden Zeitintervallen bewirkt wird,

daß der zweite Schneidevorgang über diese separaten Abschnitte hinweg in einen Abstand voneinander aufweisenden Zeitintervallen derart bewirkt wird, daß der zweite Schneidevorgang für einen Wegabschnitt vor dem ersten Schneidevorgang für den folgenden Wegabschnitt bewirkt wird, und

daß für den zweiten Schneidevorgang für einen Wegabschnitt $(1 \rightarrow 0)$ der Draht (WR) längs des Weges des Hauptschneidevorgangs $(l_1)$ für diesen einen Wegabschnitt $(1 \rightarrow 0)$ zu einer Position zurückbewegt wird, die kurz vor der Stopp-Position eines vorhergehenden zweiten Schneidevorgangs (eine Position, bei der der zweite Schneidevorgang in bezug auf einen vorhergehenden Wegabschnitt gestoppt wird) liegt, und dann der Draht (WR) relativ zu dem Werkstück längs eines zweiten Schneideweges $(l_2)$ für den einen Wegabschnitt $(1 \rightarrow 0)$ bewegt wird.

## Revendication

Un procédé d'usinage par électroérosion à fil coupant, pour couper une pièce (WK) en produisant des décharges entre un fil (WR) et la pièce (WK), dans lequel on effectue sur un chemin de coupe une coupe principale au moyen de décharges à impulsions courtes et à courant élevé, et on effectue sur ce chemin de coupe une seconde coupe au moyen de décharges sous la forme d'impulsions à courant faible, et dans lequel la première coupe et la seconde coupe sont exécutées sous commande numérique, caractérisé en ce que

on effectue la coupe principale sur des sections séparées du chemin de coupe, à des intervalles de temps espacés, en ce que

on effectue la seconde coupe sur ces sections séparées à des intervalles de temps espacés de façon à effectuer la seconde coupe d'une section de chemin avant la première coupe de la section de chemin suivante, et en ce que

pour la seconde coupe d'une première section de chemin $(1 \rightarrow 0)$, on fait reculer le fil (WR) le long du chemin de la coupe principale $(l_1)$ pour cette première section de chemin $(1 \rightarrow 0)$, jusqu'à une position située légèrement avant une position d'arrêt précédente de la seconde coupe (une position à laquelle la seconde coupe est arrêtée en relation avec une section de chemin précédente), puis on déplace le fil (WK) par rapport à la pièce le long d'un chemin de seconde coupe $(l_2)$ pour la première section de chemin $(1 \rightarrow 0)$.

# F I G. I

# FIG. 2